**Europäisches Patentamt**

**European Patent Office**

**Office européen des brevets**

(11) Veröffentlichungsnummer: **0 039 502**
**A1**

(12) # EUROPÄISCHE PATENTANMELDUNG

(21) Anmeldenummer: 81103351.3

(22) Anmeldetag: 04.05.81

(51) Int. Cl.³: **H 01 J 29/98**, H 01 F 13/00

(30) Priorität: 06.05.80 DE 3017331

(43) Veröffentlichungstag der Anmeldung: 11.11.81
Patentblatt 81/45

(84) Benannte Vertragsstaaten: **CH DE FR GB LI NL**

(71) Anmelder: **SIEMENS AKTIENGESELLSCHAFT Berlin und München, Postfach 22 02 61,
D-8000 München 22 (DE)**

(72) Erfinder: **Lins, Jürgen, Dipl.-Ing., J.F.-Kennedystrasse 1,
D-6729 Hagenbach (DE)**

(54) **Anordnung zur Kompensation von auf Farbfernsehröhren einwirkenden magnetischen Fremdfeldern.**

(57) Die bekannten Abschirmungen von Farbfernsehröhren gegen magnetische Fremdfelder sind häufig unzureichend, da die Fremdfelder durch den Bildschirm in die Röhre eindringen können. Zur Verminderung des Einflusses von magnetischen Fremdfeldern ist vorgeschlagen, in der Nähe der Fernsehröhre (R) drei Magnetsonden (H1, H2, H3) anzubringen, welche die drei Komponenten des Fremdfeldes aufnehmen. Mit den verstärkten Ausgangssignalen der Magnetsonden (H1, H2, H3) sind drei Paar Spulen (S1, S1'; S2, S2'; S3, S3') angesteuert. Sie sind um die Fernsehröhre (R) derart angebracht und mit solcher Polarität angesteuert, dass die von ihnen erzeugten Magnetfelder der von der jeweils zugehörigen Magnetsonde aufgenommenen Fremdfeldkomponente entgegengerichtet sind und im Bereich der Fernsehröhre das magnetische Fremdfeld kompensieren.

Die Erfindung wird in Farbfernsehsichtgeräten angewendet.

SIEMENS AKTIENGESELLSCHAFT
Berlin und München

Unser Zeichen
VPA 80 P 3524

0039502

Anordnung zur Kompensation von auf Farbfernsehröhren einwirkenden magnetischen Fremdfeldern

Aus dem Buch "Fernsehempfangstechnik" von M. Koubek,
Francis-Verlag München, 1969, Seite 352 ist es bekannt, zur
Vermeidung des Einflusses von magnetischen Fremdfeldern auf
Fernsehröhren um diese eine Mu-Metall-Abschirmung anzubringen. Eine solche Abschirmung ist häufig unzureichend, da
vor allem durch den Bildschirm, der nicht mit einer magnetischen Abschirmung versehen werden kann, Fremdfelder in
die Röhre eintreten können.

Der vorliegenden Erfindung liegt die Aufgabe zugrunde, eine Anordnung zu schaffen, mit welcher der störende Einfluß
von magnetischen Fremdfeldern auf Farbfernsehröhren verringert wird.

Erfindungsgemäß wird diese Aufgabe dadurch gelöst, daß drei
die Komponenten des magnetischen Fremdfeldes aufnehmende
Magnetsonden vorhanden sind, daß um die Fernsehröhre drei
Spulenanordnungen angebracht sind, die über Verstärker je
einer Magnetsonde derart nachgeschaltet sind und so ausgerichtet sind, daß sie Magnetfelder erzeugen, welche im
Bereich der Fernsehröhre das magnetische Fremdfeld kompensieren.

Die Magnetsonden sind vorteilhaft im Bereich der von den
Spulenanordnungen erzeugten Magnetfelder angebracht, so
daß sie zusammen mit den Verstärkern und den Spulenanordnungen eine Regelanordnung bilden. Sie können aber auch
außerhalb der Magnetfelder der Spulenanordnungen liegen.
Schließlich ist es, wenn das Fremdfeld konstant ist, auch

Zin 4 Scl / 02.05.1980

0039502

möglich, auf die Magnetsonden zu verzichten und die Ströme
für die Spulenanordnungen von Hand einzustellen.

Die Spulenanordnungen bestehen vorteilhaft jeweils aus zwei
Spulen, zwischen denen sich zumindest der Kolben der Fernsehröhre befindet.

Anhand der Zeichnung werden im folgenden die Erfindung
sowie weitere Ausgestaltungen und Vorteile näher beschrieben und erläutert.

In den Figuren 1 und 2 ist die Front- und eine Seitenansicht eines Ausführungsbeispiels schematisch dargestellt.
Figur 3 zeigt ein Prinzipschaltbild eines Ausführungsbeispiels.

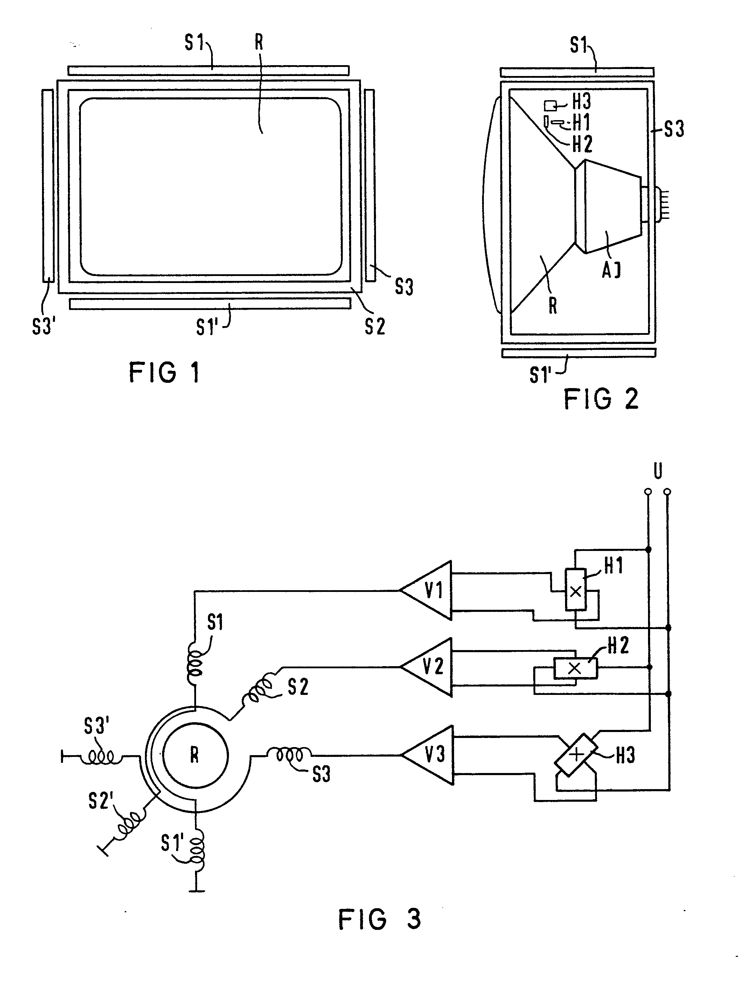

In den Figuren 1 und 2 ist mit R eine Farbfernsehröhre
bezeichnet, die von drei Spulenpaaren S1, S1′; S2, S2′;
S3, S3′ umgeben ist. Auf dem Hals der Röhre R sitzt ein
Ablenkjoch AJ. Das Spulenpaar S1, S1′ist so angeordnet,
daß es ein Magnetfeld erzeugt, welches die Röhre R in
senkrechter Richtung durchsetzt. Das Magnetfeld, das vom
in Figur 2 von der Spule S3 verdeckten Spulenpaar S2, S2′
erzeugt wird, durchläuft die Röhre in Achsenrichtung, und
das Feld der Spulen S3, S3′ verläuft in horizontaler
Richtung senkrecht zu den von den anderen Spulen erzeugten Magnetfeldern. Durch geeignete Einstellung der Ströme in den einzelnen Spulenpaaren lassen sich somit im
Bereich der Röhre R Magnetfelder beliebiger Richtung
bilden.

Innerhalb des von den Spulenpaaren erzeugten Magnetfeldes
befinden sich drei Magnetsonden H1, H2, H3, z. B. Hall-
Generatoren, die so angeordnet sind, daß sie je eine Komponente des auf sie einwirkenden Magnetfeldes aufnehmen.
Die Magnetsonde H1 gibt ein Signal ab, das der senkrecht
verlaufenden magnetfeldkomponenten entspricht. Das Aus-

0039502

- 3 -    VPA 80 P 3524

gangssignal der Magnetsonde H2 ist ein Maß für die Komponente in Richtung der Röhrenachse und das Signal der Sonde H3 für die dritte Komponente. Die Magnetsonden H1, H2, H3 sind somit derart ausgerichtet, daß sie die Magnetfeldkomponenten aufnehmen, die in Richtung der von den Spulenpaaren S1, S1' ... erzeugten Magnetfelder verlaufen. Mit diesen Signalen können über Verstärker die Ströme durch die Spulenpaare so gesteuert werden, daß ein magnetisches Fremdfeld im Bereich der Magnetsonde und damit im Bereich der Röhre R auf einen nicht mehr störenden Wert reduziert wird.

Figur 3 zeigt eine hierzu geeignete Schaltungsanordnung. An die Magnetsonden H1, H2, H3, deren unterschiedliche Ausrichtung symbolisch angedeutet ist, sind drei Verstärker V1, V2, V3 angeschlossen, welche die Spulenpaare S1, S1'; S2, S2'; S3, S3', deren Spulen jeweils in Reihe geschaltet sind, ansteuern. Die Magnetsonden sind Hall-Generatoren, die aus einer Spannungsquelle U gespeist werden. Tritt an den Magnetsonden ein magnetisches Fremdfeld auf, liefern diese eine Spannung an die mit ihnen verbundenen Verstärker, welche Ströme solcher Polarität in die Spulenpaare einspeisen, daß die einzelnen Komponenten des Fremdfeldes und damit dieses als Ganzes praktisch verschwindet. Selbstverständlich sind Regelsteilheit, Zeitkonstante und so fort in der in der Regelungstechnik üblichen Weise festzulegen, damit die Regelung einerseits stabil ist, andererseits aber nur geringe Regelabweichungen verbleiben. Da die vom Ablenkjoch erzeugten Streufelder nicht kompensiert werden sollen und eine wesentlich höhere Frequenz haben als die zu kompensierenden Fremdfelder, können in die von den Magnetsonden H1, H2, H3 zu den Spulen führenden Signalwege Tiefpaßfilter geschaltet sein, welche die vom Streufeld des Ablenkjoches herrührenden Signale unterdrücken.

In der Anordnung nach Figur 2 umschließen die Spulenpaare auch den Hals der Röhre R mit dem Ablenkjoch AJ.
Da dieses im allgemeinen eine ausreichende Abschirmung
für Magnetfelder bildet, können die Spulen S1, S1';
S3, S3' und der Abstand zwischen der Spule S2 und der
nicht sichtbaren Spule S2' so verkürzt werden, daß die
Spulenpaare nur den Röhrenkolben umgeben.

3 Figuren
3 Patentansprüche

0039502

## Patentansprüche

1. Schaltungsanordnung zur Kompensation von auf Farbfernsehröhren einwirkenden magnetischen Fremdfeldern, d a d u r c h   g e k e n n z e i c h n e t , daß drei die Komponenten des magnetischen Fremdfeldes aufnehmende Magnetsonden (H1, H2, H3) vorgesehen sind, daß um die Fernsehröhre (R) drei Spulenanordnungen (S1, S1´; S2, S2´; S3, S3´) angebracht sind, die über Verstärker (V1, V2, V3) je einer Magnetsonde (H1, H2, H3) nachgeschaltet sind und die entsprechend den Magnetsonden ausgerichtet und vom jeweiligen Verstärker derart angesteuert sind, daß sie Magnetfelder erzeugen, welche im Bereich der Fernsehröhre das magnetische Fremdfeld kompensieren.

2. Schaltungsanordnung nach Anspruch 1, d a d u r c h   g e k e n n z e i c h n e t , daß die Spulenanordnungen aus je einem Spulenpaar (S1, S1´; S2, S2´; S3, S3´) bestehen, zwischen dem sich die Fernsehröhre (R) befindet.

3. Schaltungsanordnung nach Anspruch 1 oder 2, d a - d u r c h   g e k e n n z e i c h n e t ,  daß eine Spulenanordnung ein Magnetfeld erzeugt, das in Richtung der Achse der Fernsehröhre (R) verläuft und daß die von den beiden anderen Spulenanordnungen (S1, S1´; S3, S3´) erzeugten Magnetfelder zueinander und zur Röhrenachse senkrecht verlaufen.

FIG 1

FIG 2

FIG 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - B2 - 2 146 071</u> (FÖRSTER) <br> + Gesamt + <br> -- | 1-3 |
| | <u>DE - A - 1 817 464</u> (SONY) <br> + Seite 2, Zeilen 18-26; Seiten 16-19, Patentansprüche 1-15; Fig. 8A, 8B + <br> ---- | 1-3 |

**KLASSIFIKATION DER ANMELDUNG (Int. Cl.³)**

H 01 J 29/98

H 01 F 13/00

**RECHERCHIERTE SACHGEBIETE (Int. Cl.³)**

H 01 J 29/00

H 01 J 37/00

H 01 F 13/00

H 01 F 1/00

H 04 N 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 20-07-1981 | VAKIL |

EPA form 1503.1 06.78